(19) Europäisches Patentamt
European Patent Office
Office européen des brevets

(11) **EP 2 966 407 A1**

(12) **EUROPEAN PATENT APPLICATION**
published in accordance with Art. 153(4) EPC

(43) Date of publication:
**13.01.2016 Bulletin 2016/02**

(51) Int Cl.:
**G01C 21/18** (2006.01)　　**G01C 19/00** (2013.01)

(21) Application number: **13876963.3**

(22) Date of filing: **20.09.2013**

(86) International application number:
**PCT/JP2013/075501**

(87) International publication number:
**WO 2014/136298 (12.09.2014 Gazette 2014/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **06.03.2013 JP 2013044301**

(71) Applicant: **NEC Corporation
Tokyo 108-8001 (JP)**

(72) Inventor: **SHIMIZU, Motoaki
Tokyo 108-8001 (JP)**

(74) Representative: **Vossius & Partner
Patentanwälte Rechtsanwälte mbB
Siebertstrasse 3
81675 München (DE)**

(54) **SPACE STABILIZING DEVICE, METHOD FOR CONTROLLING SAME, AND PROGRAM**

(57) The spatial stabilization device of this invention includes: a first controlled object linked to a stationary part so as to freely rotate around a first axis; a second controlled object linked to the first controlled object so as to freely rotate around a second axis; and an inertial sensor that generates a first measured angular velocity signal that indicates an angular velocity in a first coordinate system. The spatial stabilization device: converts the angular velocity detected by the inertial sensor to an angular velocity of a second coordinate system that is fixed to the first controlled object; controls a first angle, which is the angle around the first axis of the first controlled object, in accordance with the angular velocity, the detection result of the first angle, and the target angle of the first angle; converts the angular velocity in the second coordinate system to an angular velocity of a third coordinate system fixed to the second controlled object; and controls a second angle, which is the angle of the second controlled object around the second axis, in accordance with the angular velocity obtained by subtracting a target angular velocity of the first angle from this angular velocity and the detection result of the second angle.

FIG. 1

**Description**

TECHNICAL FIELD

The present invention relates to a spatial stabilization device, a control method of the same, and a program.

BACKGROUND ART

When information is to be acquired from an apparatus such as a radar antenna or a camera that is mounted in a moving body such as an aircraft, a ship, or a vehicle, shaking that arises due to the movement of the moving body or external causes may at times prevent the acquisition of accurate information. In such cases, a spatial stabilization device is typically used that, regardless of external disturbance received from the moving body, can stabilize the attitude of objects that are loaded in the moving body.

In the above-described spatial stabilization device, one or more controlled objects are connected in a series to a stationary part by way of a linking part that is provided with one rotational axis, and the rotation angle of the linking part is controlled. An example of such a spatial stabilization device is disclosed in Patent Literature 1 (JP 2004-361121A).

The spatial stabilization device disclosed in Patent Literature 1 is provided with: an outer gimbal and an inner gimbal that are the objects of control, an outer torquer that drives the rotation of the outer gimbal with respect to the stationary part, an inner torquer that drives the rotation of the inner gimbal with respect to the outer gimbal, an outer servo-amplifier that supplies the drive signal of the outer torquer, and an inner servo-amplifier that supplies the drive signal of the inner torquer. The outer gimbal is linked to the stationary part so as to freely rotate around one rotational axis. The inner gimbal is linked to the outer gimbal so as to freely rotate around one rotational axis and is fixed to a payload (a radar antenna or camera) that is the final object of spatial stabilization. The direction of the rotational axis of the outer gimbal is identical to the direction of the rotational axis of the inner gimbal.

In Patent Literature 1, two configurations (hereinbelow referred to as the first configuration and the second configuration) are disclosed for the above-described spatial stabilization device.

In the first configuration, an inner inertial sensor that detects the angle of rotation around the rotational axis of the inner gimbal with respect to the inertial system and an angle sensor that detects the angle of rotation of the inner gimbal with respect to the outer gimbal are provided.

In the second configuration, an outer inertial sensor that detects the angle of rotation around the rotational axis of the outer gimbal with respect to the inertial system is further added to the first configuration.

The operation of the spatial stabilization device disclosed in Patent Literature 1 is next described.

The inner servo-amplifier drives the inner torquer based on the detection result of the inner inertial sensor to control the angle of rotation of the inner gimbal with respect to the outer gimbal. This operation is common to the first configuration and the second configuration.

In the first configuration, the outer servo-amplifier drives the outer torquer based on the detection result of the angle sensor to control the rotation angle of the outer gimbal with respect to the stationary part.

In the second configuration, the outer servo-amplifier drives the outer torquer based on the detection result of the outer inertial sensor and angle sensor to control the angle of rotation of the outer gimbal with respect to the stationary part.

By means of the above-described operations, the inner gimbal in the first configuration is rotationally controlled and spatially stabilized based on the detection result of the inner inertial sensor.

In the second configuration, the inner gimbal is rotationally controlled and spatially stabilized based on the detection result of the inner inertial sensor. In addition, the outer gimbal is rotationally controlled and spatially stabilized based on the detection results of the outer inertial sensor and the angle sensor. As a result, spatial stabilization is improved in the second configuration over that of the first configuration.

CITATION LIST

Patent Literatures:

Patent Literature 1: JP 2004-361121A

SUMMARY OF THE INVENTION

Problem to be Solved by the Invention:

In a spatial stabilization device having the above-described first configuration, the problem arises that spatial stabilization is lower than that of a spatial stabilization device having the above-described second configuration due to the lack of an outer inertial sensor.

However, the spatial stabilization device having the second configuration necessitates a plurality of inertial sensors (inner inertial sensor and outer inertial sensor), and the problem therefore arises that the number of parts increases over that of a spatial stabilization device having the first configuration.

It is an object of the present invention to provide a spatial stabilization device, a control method of this spatial stabilization device, and a program that can achieve an improvement of spatial stabilization while limiting increase of the number of parts.

Means for Solving the Problem:

A spatial stabilization device of the present invention for achieving the above-described object includes:

a first controlled object that is linked to a stationary part so as to freely rotate around a first axis;

a second controlled object that is linked to the first controlled object so as to freely rotate around a second axis;

a first angle detector that detects a first angle that is an angle around the first axis of the first controlled object with respect to the stationary part and that generates a first angle detection signal that indicates result of the detection;

a second angle detector that detects a second angle that is an angle around the second axis of the second controlled object with respect to the first controlled object and that generates a second angle detection signal that indicates result of the detection;

an inertial sensor that detects an angular velocity in a first coordinate system at an attachment position and that generates a first measured angular velocity signal that indicates result of the detection;

a first trajectory generator that, in accordance with a first target value of the first angle that has been set in advance, generates a target angle signal that indicates an angle trajectory at which the first angle becomes the first target value and a target angular velocity signal that indicates a target angular velocity trajectory that is a trajectory of an angular velocity that corresponds to the angle trajectory;

a first coordinate converter that converts the angular velocity that is indicated in the first measured angular velocity signal to an angular velocity in a second coordinate system that is fixed to the first controlled object and that generates a second measured angular velocity signal that indicates the angular velocity that follows the conversion;

a first subtractor that subtracts the angular velocity that is indicated in the target angular velocity signal from the angular velocity that is indicated in the second measured angular velocity signal and that generates a third measured angular velocity signal that indicates the angular velocity that follows the subtraction;

a second coordinate converter that converts the angular velocity that is indicated in the third measured angular velocity signal to an angular velocity in a third coordinate system that is fixed to the second controlled object and that generates a fourth measured angular velocity signal that indicates the angular velocity that follows the conversion;

a first controller that controls the first angle in accordance with the target angle signal, the first angle detection signal, and the second measured angular velocity signal; and

a second controller that controls the second angle in accordance with a second target value of the second angle that has been set in advance, the second angle detection signal, and the fourth measured angular velocity signal.

The control method of the spatial stabilization device of the present invention for achieving the above-described object is a control method of a spatial stabilization device and includes:

detecting a first angle, which is an angle around a first axis of a first controlled object that is linked to a stationary part so as to freely rotate around the first axis with respect to the stationary part, and then generating a first angle detection signal that indicates result of the detection;

detecting a second angle, which is an angle around a second axis of a second controlled object that is linked to the first controlled object so as to freely rotate around the second axis with respect to the first controlled object, and then generating a second angle detection signal that indicates result of the detection;

detecting an angular velocity in a first coordinate system and generating a first measured angular velocity signal that indicates result of the detection;

converting the angular velocity that is indicated in the first measured angular velocity signal to an angular velocity in a second coordinate system that is fixed to the first controlled object and then generating a second measured angular velocity signal that indicates the angular velocity that follows the conversion;

subtracting the angular velocity that is indicated in the target angular velocity signal from the angular velocity that is indicated in the second measured angular velocity signal and then generating a third measured angular velocity signal that indicates the angular velocity that follows the subtraction;

converting the angular velocity that is indicated in the third measured angular velocity signal to an angular velocity in a third coordinate system that is fixed to the second controlled object and then generating a fourth measured angular velocity signal that indicates the angular velocity that follows the conversion;

controlling the first angle in accordance with the target angle signal, the first angle detection signal, and the second measured angular velocity signal; and

controlling the second angle in accordance with a second target value of the second angle that has been set in advance, the second angle detection signal, and the fourth measured angular velocity signal.

The program of the present invention for achieving the above-described object causes a computer in a spatial stabilization device that is equipped with: a first controlled object that is linked to a stationary part so as to freely rotate around a first axis; a second controlled object that is linked to the first controlled object so as to freely rotate around a second axis; a first angle detector that detects a first angle that is an angle around the first axis of the first controlled object with respect to the stationary part and that generates a first angle detection signal that indicates result of the detection; a second angle detector that detects a second angle that is an angle around the second axis of the second controlled object with respect to the first controlled object and that generates a second angle detection signal that indicates result of the detection; and an inertial sensor that detects an angular velocity in a first coordinate system at an attachment position and that generates a first measured angular velocity signal that indicates the detection result to execute processes of:

in accordance with a first target value of the first angle that was set in advance, generating a target angle signal that indicates an angle trajectory at which the first angle becomes the first target value and a target angular velocity signal that indicates a target angular velocity trajectory that is a trajectory of an angular velocity that corresponds to the angle trajectory;

converting the angular velocity that is indicated in the first measured angular velocity signal to an angular velocity in a second coordinate system that is fixed to the first controlled object and generating a second measured angular velocity signal that indicates the angular velocity that follows the conversion;

subtracting the angular velocity that is indicated in the target angular velocity signal from the angular velocity that is indicated in the second measured angular velocity signal and then generating a third measured angular velocity signal that indicates the angular velocity that follows the subtraction;

converting the angular velocity that is indicated in the third measured angular velocity signal to an angular velocity in a third coordinate system that is fixed to the second controlled object and then generating a fourth measured angular velocity signal that indicates the angular velocity that follows the conversion;

controlling the first angle in accordance with the target angle signal, the first angle detection signal, and the second measured angular velocity signal; and

controlling the second angle in accordance with a second target value of the second angle that has been set in advance, the second angle detection signal, and the fourth measured angular velocity signal.

Advantageous Effect of the Invention:

The present invention enables an improvement in spatial stabilization while limiting increase of the number of parts.

BRIEF DESCRIPTION OF THE DRAWINGS

FIG. 1 is a block diagram showing the configuration of the spatial stabilization device according to the first exemplary embodiment of the present invention;

FIG. 2 is a block diagram showing an example of the hardware configuration of the spatial stabilization device shown in FIG. 1;

FIG. 3 is a block diagram showing the principal configuration of the spatial stabilization device according to the first exemplary embodiment of the present invention;

FIG. 4 is a block diagram showing the configuration of the spatial stabilization device according to the third exemplary embodiment of the present invention;

FIG. 5 is a block diagram showing the configuration of the spatial stabilization device according to the fourth exemplary embodiment of the present invention;

FIG. 6 is a block diagram showing the configuration of the spatial stabilization device according to the fifth exemplary embodiment of the present invention; and

FIG. 7 is a block diagram showing the configuration of the spatial stabilization device according to the sixth exemplary embodiment of the present invention.

MODES FOR CARRYING OUT THE INVENTION

Exemplary embodiments of the present invention are next described with reference to the accompanying drawings.

First Exemplary Embodiment:

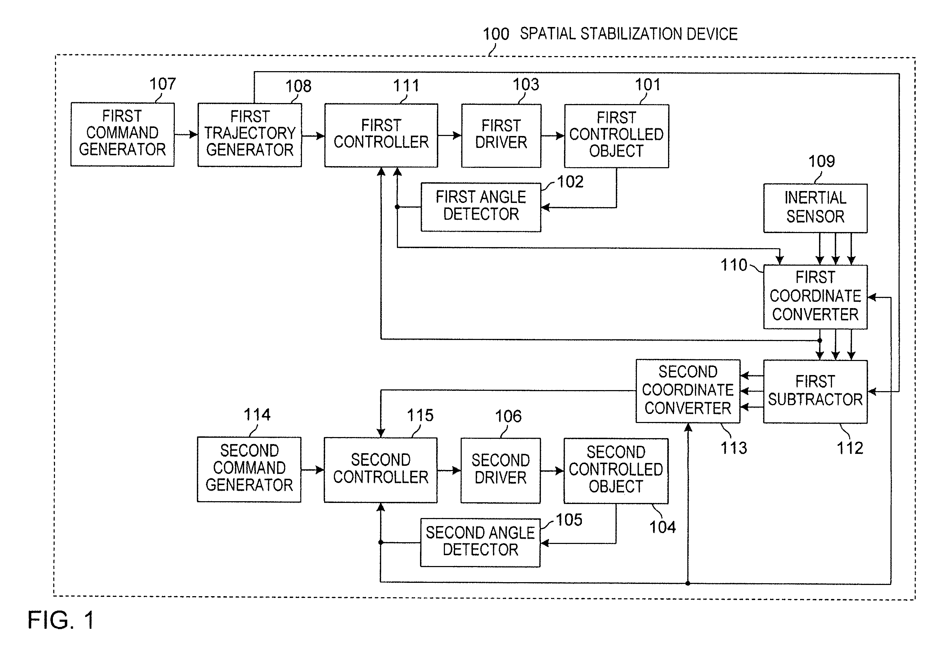

FIG. 1 is a block diagram showing the configuration of spatial stabilization device 100 according to the first exemplary embodiment of the present invention.
In the spatial stabilization device according to the present invention described hereinbelow, the stationary part to which the spatial stabilization device is attached and the payload that is the ultimate object of spatial stabilization are assumed to be connected in a series by way of two linking parts each provided with one rotational axis. In the following explanation, the rotational axis of the linking part closer to the stationary part is referred to as the first axis, and the rotational axis of the linking part that is closer to the payload is referred to as the second axis.
In the following explanation, the stationary part is assumed to be attached to a flying body such as an aircraft. The shaking of the flying body (hereinbelow referred to as "airframe shaking") that results from the flight of the flying body or external disturbances such as wind is applied to the spatial stabilization device by way of the stationary part. The spatial stabilization device rotationally controls the payload to eliminate airframe shaking.
Spatial stabilization device 100 of the present exemplary embodiment is provided with: first controlled object 101, first angle detector 102, first driver 103, second controlled object 104, second angle detector 105, second driver 106, first command generator 107, first trajectory generator 108, inertial sensor 109, first coordinate converter 110, first controller 111, first subtractor 112, second coordinate converter 113, second command generator 114, and second controller 115.
First controlled object 101 is linked to the stationary part (not shown) so as to freely rotate around the first axis. The stationary part is the object to which spatial stabilization device 100 is attached, and the stationary part itself is not necessarily stationary. In other words, the stationary part may be a moving body, a fixed object, or the object of the control of another spatial stabilization device. In the following explanation, the coordinate system that is fixed to the stationary part is referred to as the stationary part coordinate system.
First angle detector 102 detects the first angle, which is the angle around the first axis of the first controlled object 101 with respect to the stationary part. The first angle detector 102 further generates a first angle signal that indicates the first angle that is detected and supplies the first angle signal to first coordinate converter 110 and first controller 111.
First driver 103 causes first controlled object 101 to rotate around the first axis in accordance with a signal supplied from first controller 111.
Second controlled object 104 is linked to first controlled object 101 so as to freely rotate around the second axis. Second controlled object 104 may be the stationary part of another spatial stabilization device.
Second angle detector 105 detects a second angle, which is the angle around the second axis of second controlled object 104 with respect to first controlled object 101. Second angle detector 105 further generates a second angle signal that indicates the second angle that is detected, and supplies the second angle signal to first coordinate converter 110, second coordinate converter 113, and second controller 115.
Second driver 106 causes second controlled object 104 to rotate around the second axis in accordance with the signal supplied from second controller 115.
First command generator 107 generates a signal that indicates a target angle of the first angle (first target value) that is set in advance and supplies the signal to first trajectory generator 108.
First trajectory generator 108 identifies the angle trajectory at which first angle becomes the target angle that is indicated in the signal applied from first command generator 107 and the angular velocity trajectory that corresponds to this angle trajectory. First trajectory generator 108 further generates a target angle signal that indicates the angle trajectory that is identified and a target angular velocity signal that indicates the angular velocity trajectory that is identified, supplies the target angle signal to first controller 111, and supplies the target angular velocity signal to first subtractor 112. Here, "trajectory" means the process of change over time.
Alternatively, first command generator 107 need not be provided, and first trajectory generator 108 may hold the target angle of the first angle. Accordingly, first command generator 107 is not an indispensable constituent element.
Inertial sensor 109 detects angular velocity (which is the angular velocity that occurs in spatial stabilization device 100 and is hereinbelow referred to as the "shaking angular velocity") in an orthogonal coordinate system that is fixed to inertial sensor 109 at the attachment position. In the following explanation, the orthogonal coordinate system that is fixed to inertial sensor 109 is referred to as the inertial sensor coordinate system (first coordinate system). Inertial sensor 109 generates a first measured angular velocity signal that indicates the angular velocity (three components of the inertial sensor coordinate system) in the inertial sensor coordinate system that is detected and supplies the first measured angular velocity signal to first coordinate converter 110. In the present exemplary embodiment, inertial sensor 109 is assumed to be attached to first controlled object 101.

First coordinate converter 110 converts the angular velocity (shaking angular velocity) in the inertial sensor coordinate system that is indicated in the first measured angular velocity signal to an angular velocity in a coordinate system that is fixed to first controlled object 101 (hereinbelow referred to as the second coordinate system).

More specifically, first coordinate converter 110 calculates three components of the Euler angle of rotation from the inertial sensor coordinate system of the shaking angular velocity in the inertial sensor coordinate system to the second coordinate system (hereinbelow referred to as the Euler angle components of the shaking angular velocity in the second coordinate system). The second coordinate system and the inertial sensor coordinate system are assumed to coincide.

In addition, first coordinate converter 110 generates a second measured angular velocity signal that indicates the angular velocity that follows the coordinate conversion (the Euler angle components of the shaking angular velocity in the second coordinate system) and supplies the second measured angular velocity signal to first controller 111 and first subtractor 112. First coordinate converter 110 supplies to first controller 111 a second measured angular velocity signal that indicates the component (hereinbelow referred to as the first angle component) that corresponds to the first angle among the Euler angle components of the shaking angular velocity in the second coordinate system.

First controller 111 supplies a signal that controls the first angle (the rotation of first controlled object 101) to first driver 103 in accordance with the first angle detection signal, the target angle signal, and the second measured angular velocity signal (the second measured angular velocity signal that indicates the first angle component of the Euler angle of the shaking angular velocity in the second coordinate system).

Alternatively, first driver 103 need not be provided, and first controller 111 may directly control the rotation of first controlled object 101. Accordingly, first driver 103 is not an indispensable constituent element.

First subtractor 112 subtracts the angular velocity that is indicated in the target angular velocity signal from the shaking angular velocity in the second coordinate system that is indicated in the second measured angular velocity signal. First subtractor 112 further supplies a third measured angular velocity signal that indicates the angular velocity that follows the subtraction to second coordinate converter 113. First subtractor 112 carries out subtraction for each component of the angular velocity.

Second coordinate converter 113 converts the angular velocity indicated in the third measured angular velocity signal to an angular velocity in the coordinate system that is fixed to second controlled object 104 (hereinbelow referred to as the third coordinate system).

More specifically, second coordinate converter 113 calculates three components (hereinbelow referred to as the Euler angle components of the shaking angular velocity in the third coordinate system) of the Euler angle of rotation from the second coordinate system of the angular velocity in the second coordinate system that is indicated in the third measured angular velocity signal to the third coordinate system.

In addition, second coordinate converter 113 generates a fourth measured angular velocity signal that indicates the angular velocity that follows the coordinate conversion (the Euler angle components of the shaking angular velocity in the third coordinate system) and supplies the fourth measured angular velocity signal to second controller 115. Here, second coordinate converter 113 supplies the fourth measured angular velocity signal that indicates the component (hereinbelow referred to as the second angle component) that corresponds to the second angle among the three components of the Euler angle of the shaking angular velocity in the third coordinate system.

Second command generator 114 holds a target angle of the second angle that has been set in advance and supplies a signal indicating this target angle to second controller 115.

Second controller 115 supplies to second driver 106 a signal that controls the second angle in accordance with the second angle detection signal, the fourth measured angular velocity signal (the fourth measured angular velocity signal that indicates the second angle component of the Euler angle of the shaking angular velocity in the third coordinate system), and the target angle of the second angle.

Second driver 106 need not be provided, and second controller 115 may directly control the rotation of second controlled object 104. Accordingly, second driver 106 is not an indispensible component. In addition, second command generator 114 need not be provided, and second controller 115 may hold the target angle of the second angle. Accordingly, second command generator 114 is not an indispensable component.

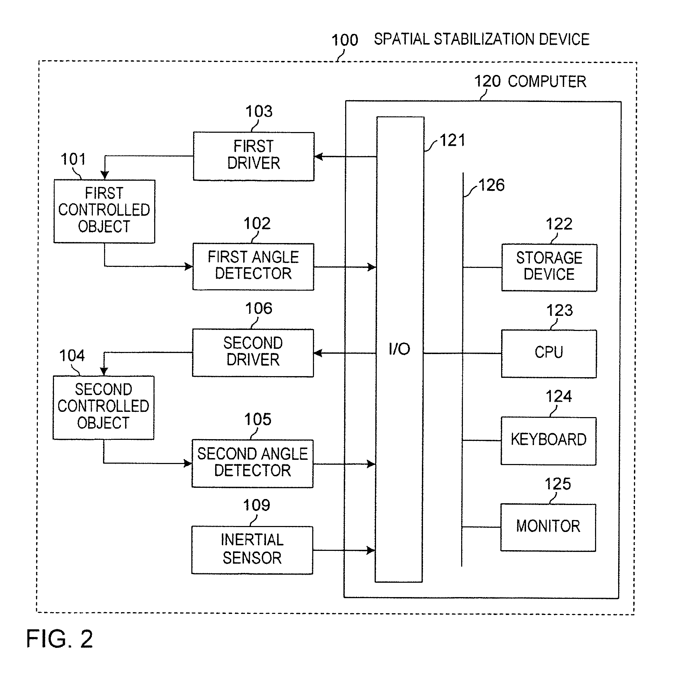

FIG. 2 shows an example of the hardware configuration of spatial stabilization device 100. In FIG. 2, identical reference numbers are given to constituent elements that are identical to FIG. 1, and redundant explanation is omitted.

Spatial stabilization device 100 shown in FIG. 2 is provided with: first controlled object 101, first angle detector 102, first driver 103, second controlled object 104, second angle detector 105, second driver 106, inertial sensor 109, and computer 120.

Computer 120 is provided with I/O (Input/Output) interface 121, storage device 122, CPU (Central Processing Unit) 123, keyboard 124, and monitor 125. The parts described above are each connected by way of internal bus 126.

Input/output interface 121 is connected to first angle detector 102, first driver 103, second angle detector 105, second driver 106, and inertial sensor 109 and carries out the transmission and reception of data between these components and computer 120.

Storage device 122 stores, for example, programs that are to be executed by CPU 123.

CPU 123 controls all of computer 120, executes programs stored in storage device 122, and carries out the transmission and reception of data by way of input/output interface 121.

Keyboard 124 receives the manipulation input from the user.

Monitor 125 displays, for example, the operation results of CPU 123.

Computer 120 may also be provided with only CPU 123 and may use storage device 122, CPU 123, keyboard 124, and monitor 125 that are provided externally to operate.

The operation of spatial stabilization device 100 is next described.

First controller 111 receives the input of the first angle detection signal, the target angle signal, and the second measured angular velocity signal that indicates the first angle component of the Euler angle of the shaking angular velocity in the second coordinate system.

First controller 111 controls the rotation of first controlled object 101 such that the difference between the target angle trajectory that is indicated in the target angle signal and the detected angle of first angle detector 102 that is indicated in the first angle detection signal becomes "0". First controller 111 here subtracts from the target angle trajectory the first angle component of the Euler angle of the shaking angular velocity in the second coordinate system that is indicated in the second measured angular velocity signal, whereby the airframe shaking around the first axis can be cancelled. As a result, the angle of first controlled object 101 with respect to the stationary part is controlled to achieve spatial stabilization with respect to the inertial system.

The first angle detection signal, the second angle detection signal, and the first measured angular velocity signal are applied as input to first coordinate converter 110.

First coordinate converter 110 converts the angular velocity in the inertial sensor coordinate system that is indicated in the first measured angular velocity signal to an angular velocity in the second coordinate system (the Euler angle components of the shaking angular velocity in the second coordinate system) and generates the second measured angular velocity signal that indicates the angular velocity that follows the conversion. First coordinate converter 110 then supplies the second measured angular velocity signal that indicates the three angle components of the Euler angle of the shaking angular velocity in the second coordinate system. First coordinate converter 110 further supplies to first controller 111 the second measured angular velocity signal that indicates the first angle component of the Euler angle of the shaking angular velocity in the second coordinate system.

As described above, in the present exemplary embodiment, inertial sensor 109 is attached to first controlled object 101. As a result, the output of inertial sensor 109 becomes a signal in which the first angular velocity trajectory signal, which indicates the angular velocity produced by the rotation of first controlled object 101 along the target angular velocity trajectory, is superposed on a first residual shaking angular velocity signal that indicates the first residual shaking angular velocity in which, by rotating first controlled object 101 so as to achieve spatial stabilization, the airframe shaking is eliminated from the airframe shaking around the first axis that arises in spatial stabilization device 100.

The target angular velocity signal and the second measured angular velocity signal are applied as input to first subtractor 112.

First subtractor 112 subtracts the angular velocity indicated in the target angular velocity signal from the angular velocity (the Euler angle components of the shaking angular velocity in the second coordinate system) that is indicated by the second measured angular velocity signal, whereby the angular velocity indicated in the first angular velocity trajectory signal is eliminated from the detection result of the angular velocity by inertial sensor 109 to enable extraction of the first residual shaking angular velocity. First subtractor 112 supplies the first residual shaking angular velocity signal that indicates the first residual shaking angular velocity as the third measured angular velocity signal.

The second angle detection signal and the third measured angular velocity signal (first residual shaking angular velocity signal) are applied as input to second coordinate converter 113.

Second coordinate converter 113 converts the first residual shaking angular velocity indicated in the third measured angular velocity signal to an angular velocity in the third coordinate system (the Euler angle component of the shaking angular velocity in the third coordinate system). Second coordinate converter 113 then supplies as output the fourth measured angular velocity signal that indicates the second angle component of the Euler angle of the shaking angular velocity in the third coordinate system.

The second angle detection signal, the fourth measured angular velocity signal, and a signal that indicates the target angle of the second angle are applied as input to second controller 115.

Second controller 115 controls the rotation of second controlled object 104 such that the difference between the target angle of the second angle and the detected angle of second angle detector 105 that is indicated in the second angle detection signal becomes "0". Here, second controller 115 subtracts the second angle component of the Euler angle of the shaking angular velocity in the third coordinate system that is indicated in the fourth measured angular velocity signal from the target angle, whereby the first residual shaking angular velocity can be cancelled. As a result, the angle of second controlled object 104 with respect to first controlled object 101 is controlled to achieve spatial stabilization with respect to inertial space.

The coordinate conversion realized by first coordinate converter 110 and second coordinate converter 113 is next described.

In the following explanation, coordinate conversion from coordinate system $i$ to coordinate system $k$ is assumed to be represented by matrix ${}^{k}C_{i}$. It is further assumed that a method of expression is used that is realized by the roll angle ($\phi$), the pitch angle ($\theta$) and the yaw angle ($\psi$), this method being one expression method realized by Euler angles of the rotation from coordinate system $i$ to coordinate system $k$.

An example of coordinate conversion from coordinate system $i$ to coordinate system $k$ is shown in Eq. (1).

$$ {}^{k}C_{i} = C^{1}(\phi)C^{2}(\theta)C^{3}(\psi) = \begin{bmatrix} 1 & 0 & 0 \\ 0 & \cos\phi & \sin\phi \\ 0 & -\sin\phi & \cos\phi \end{bmatrix} \begin{bmatrix} \cos\theta & 0 & -\sin\theta \\ 0 & 1 & 0 \\ \sin\theta & 0 & \cos\theta \end{bmatrix} \begin{bmatrix} \cos\psi & \sin\psi & 0 \\ -\sin\psi & \cos\psi & 0 \\ 0 & 0 & 1 \end{bmatrix} $$

$$ \text{Eq. (1)} $$

In the following explanation, the roll angle, pitch angle, and yaw angle of the rotation from the stationary part coordinate system to the second coordinate system (the coordinate system that is fixed to first controlled object 101) is represented by $\phi_1$, $\theta_1$, and $\psi_1$, respectively. In addition, the roll angle, pitch angle, and yaw angle of rotation from the second coordinate system to the third coordinate system (the coordinate system that is fixed to the second controlled object 104) is represented by $\phi_2$, $\theta_2$, and $\psi_2$, respectively. At this time, the coordinate conversion from the stationary part coordinate system to the second coordinate system and the coordinate conversion from second coordinate system to the third coordinate system are expressed by Eq. (2) and Eq. (3), respectively.

$$ {}^{1}C_{0} = C^{1}(\phi_1)C^{2}(\theta_1)C^{3}(\psi_1) \qquad \text{Eq. (2)} $$

$$ {}^{2}C_{1} = C^{1}(\phi_2)C^{2}(\theta_2)C^{3}(\psi_2) \qquad \text{Eq. (3)} $$

Still further, it is assumed in the following explanation the direction of the rotational axis of the yaw angle of rotation from the stationary part coordinate system to the second coordinate system coincides with the direction of the first axis, and that the first angle is represented by $\psi_{11}$. In addition, the result of rotating the second coordinate system by the first angle $\psi_{11}$ is assumed to coincide with the third coordinate system. The direction of the rotational axis of the yaw angle of rotation of the third coordinate system is assumed to coincide with the direction of the second axis, and the second angle is represented by $\psi_{22}$. Finally, the angular velocity in the inertial sensor coordinate system is assumed to be represented as $[\omega_x \ \omega_y \ \omega_z]^T$.

The output of first coordinate converter 110 is represented as $[\omega_{x1} \ \omega_{y1} \ \omega_{z1}]^T$.

The output of first subtractor 112 is represented as $[\omega_{xa1} \ \omega_{ya1} \ \omega_{za1}]^T$.

The output of second coordinate converter 113 is represented as $[\omega_{x2} \ \omega_{y2} \ \omega_{z2}]^T$.

At this time, first coordinate converter 110 converts the input from inertial sensor 109 in accordance with the following Eq. (4) and supplies the result. As a result, the angular velocity in the inertial sensor coordinate system is converted to angular velocity in the second coordinate system.

$$ [\omega_{x1} \ \ \omega_{y1} \ \ \omega_{z1}]^T = [\omega_x \ \ \omega_y \ \ \omega_z]^T \qquad \text{Eq. (4)} $$

Second coordinate converter 113 converts the input from first subtractor 112 in accordance with the following Eq. (5) and supplies the result. As a result, the angular velocity in the second coordinate system is converted to the angular velocity in the third coordinate system. Explanation is here presented taking as an example a case in which one axis (the z-axis) of the three axes of the inertial sensor coordinate system is caused to coincide with the direction of the first axis.

$$\begin{bmatrix} \omega_{x2} & \omega_{y2} & \omega_{z2} \end{bmatrix}^T = C^3(\psi_{22})\begin{bmatrix} \omega_{xa1} & \omega_{ya1} & \omega_{za1} \end{bmatrix}^T \qquad \text{Eq. (5)}$$

In addition, first coordinate converter 110 may use, in place of Eq. (4), Eq.(6) that is a relational expression of the time-integration of an Euler angle that uses a 1-2-3 Euler angle sequence to convert the angular velocity in the inertial sensor coordinate system to the angular velocity in the second coordinate system.

$$\begin{bmatrix} \omega_{x1} & \omega_{y1} & \omega_{z1} \end{bmatrix}^T = \begin{bmatrix} \omega_x & \omega_y & \omega_z \end{bmatrix}^T \qquad \text{Eq. (6)}$$

Second coordinate converter 113 may use, in place of Eq. (5), Eq. (7) that is a relational expression of the time-integration of an Euler angle that uses a 1-2-3 Euler angle sequence to convert the angular velocity in the second coordinate system to the angular velocity in the third coordinate system.

$$\begin{bmatrix} \omega_{x2} & \omega_{y2} & \omega_{z2} \end{bmatrix}^T = \begin{bmatrix} \cos(\psi_{22}) & -\sin(\psi_{22}) & 0 \\ \sin(\psi_{22}) & \cos(\psi_{22}) & 0 \\ 0 & 0 & 1 \end{bmatrix} \begin{bmatrix} \omega_{xa1} & \omega_{ya1} & \omega_{za1} \end{bmatrix}^T \qquad \text{Eq. (7)}$$

An example is here described in which one axis (the z-axis) among the three axes of the inertial sensor coordinate system is caused to coincide with the direction of the first axis.

Thus, according to spatial stabilization device 100 of the present exemplary embodiment, both of first controller 111 and second controller 115 use the detection results of inertial sensor 109.

More specifically, first controller 111 uses the detection result of inertial sensor 109 to control the rotation of first controlled object 101 such that airframe shaking around the first axis is cancelled. As a result, the angle of first controlled object 101 with respect to the stationary part is controlled to achieve spatial stabilization with respect to inertial space.

Second controller 115 also uses the detection result of inertial sensor 109 to control the rotation of second controlled object 104 so as to cancel the first residual shaking angular velocity that could not be eliminated in first controller 111. As a result, the angle with respect to first controlled object 101 of second controlled object 104 is controlled so as to achieve spatial stabilization with respect to inertial space.

Accordingly, an improvement of the spatial stability can be achieved by using only one inertial sensor 109.

Still further, when the direction of one axis of the three axes of the inertial sensor coordinate system (in the present exemplary embodiment, explanation regards the case of the z-axis, but the present invention is not limited to the z-axis) coincides with the direction of the first axis and second axis, the components of the remaining two axes of the three axes of the inertial sensor coordinate system are replaced by "0" and spatial stabilization device 100 operates using only one component.

In the present exemplary embodiment, first controller 111 controls the rotation of first controlled object 101 such that the difference between the target angle of the first angle and the detected angle of first angle detector 102 becomes "0". In addition, second controller 115 controls the rotation of second controlled object 104 such that the difference between the target angle of the second angle and the detected angle of the second angle detector 105 becomes "0".

The present invention is not limited to this form, and first controller 111 may also differentiate the detected angle of first angle detector 102 to calculate the angular velocity and control the rotation of first controlled object 101 such that the difference between the calculated angular velocity and the target angular velocity becomes "0". Second controller 115 may differentiate the detected angle of second angle detector 105 to calculate the angular velocity and control the rotation of second controlled object 104 such that the difference between the calculated angular velocity and the target angular velocity becomes "0".

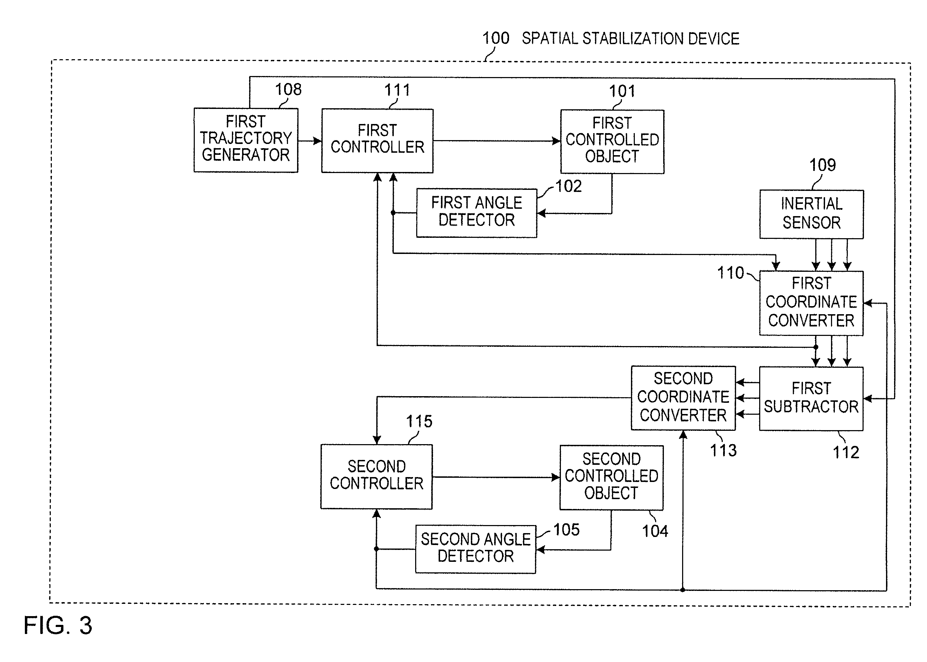

FIG. 3 is a block diagram showing the principal configuration of spatial stabilization device 100 of the present exemplary embodiment.

As described above, first controller 111 may be configured to directly control the rotation of first controlled object 101. Second controller 115 may also be configured to directly control the rotation of second controlled object 104. In this case, first driver 103 and second driver 106 are not necessary. Accordingly, compared to spatial stabilization device 100 shown in FIG. 1, first driver 103 and second driver 106 have been omitted in spatial stabilization device 100 shown in FIG. 3.

As described above, first trajectory generator 108 may hold the target angle of the first angle and then specify the angle trajectory and angular velocity trajectory. In this case, first command generator 107 is unnecessary. Accordingly, compared to spatial stabilization device 100 shown in FIG. 1, first command generator 107 is omitted in spatial stabilization device 100 shown in FIG. 3.

Still further, as described hereinabove, second controller 115 may also hold the target angle of the second angle and may control the rotation of second controlled object 104 such that the difference between the target angle and the detected angle of second angle detector 105 becomes "0". In this case, second command generator 114 is unnecessary, and accordingly, compared to spatial stabilization device 100 shown in FIG. 1, second command generator 114 is omitted in spatial stabilization device 100 shown in FIG. 3.

Second Exemplary Embodiment:

The configuration of the spatial stabilization device according to the second exemplary embodiment of the present invention is the same as the configuration of spatial stabilization device 100 of the first exemplary embodiment, and a drawing is therefore omitted. In addition, explanation of points common to the present exemplary embodiment and the first exemplary embodiment is omitted.

In contrast to the first exemplary embodiment in which inertial sensor 109 is attached to first controlled object 101, inertial sensor 109 in the present exemplary embodiment is attached to second controlled object 104.

In addition, since inertial sensor 109 is attached to second controlled object 104, the operation of coordinate conversion by first coordinate converter 110 differs. In other words, first coordinate converter 110 uses the following Eq. (8) to carry out coordinate conversion.

$$\begin{bmatrix} \omega_{x1} & \omega_{y1} & \omega_{z1} \end{bmatrix}^T = \left\{ C^3(\psi_{22}) \right\}^{-1} \begin{bmatrix} \omega_x & \omega_y & \omega_z \end{bmatrix}^T \qquad \text{Eq. (8)}$$

First coordinate converter 110 may also use Eq. (9) in place of Eq. (8), which is a relational expression of the time-integration of an Euler angle that uses a 1-2-3 Euler angle sequence.

$$\begin{bmatrix} \omega_{x1} & \omega_{y1} & \omega_{z1} \end{bmatrix}^T = \begin{bmatrix} \cos(-\psi_{22}) & -\sin(-\psi_{22}) & 0 \\ \sin(-\psi_{22}) & \cos(-\psi_{22}) & 0 \\ 0 & 0 & 1 \end{bmatrix} \begin{bmatrix} \omega_x & \omega_y & \omega_z \end{bmatrix}^T \qquad \text{Eq. (9)}$$

Thus, according to the spatial stabilization device of the present exemplary embodiment, inertial sensor 109 is attached to second controlled object 104, and first coordinate converter 110 uses Eq. (8) or Eq. (9) to convert the angular velocity in the inertial sensor coordinate system to angular velocity in the second coordinate system.

As a result, as in the first exemplary embodiment, first controller 111 is able to use the detection results of inertial sensor 109 to control the rotation of first controlled object 101 such that the airframe shaking around the first axis is cancelled. As a result, the angle of first controlled object 101 with respect to the stationary part is controlled to achieve spatial stabilization with respect to inertial space.

In addition, second controller 115 is able to use the detection result of inertial sensor 109 to generate signals that control the rotation of second controlled object 104 so as to cancel first residual shaking angular velocity that could not be eliminated in first controller 111. As a result, the angle of second controlled object 104 with respect to first controlled object 101 is controlled to achieve spatial stabilization with respect to the inertial space.

Thus, according to the spatial stabilization device of the present exemplary embodiment, an improvement of the spatial stabilization can be achieved when inertial sensor 109 is attached to the second controlled object.

When the direction of one axis (not limited to the z-axis) among the three axes of the inertial sensor coordinate system coincides with the direction of the first axis and the second axis, the spatial stabilization device of the present exemplary embodiment replaces the components of the remaining two axes of the three axes of the inertial sensor coordinate system by "0" and operates using only one component.

Third Exemplary Embodiment:

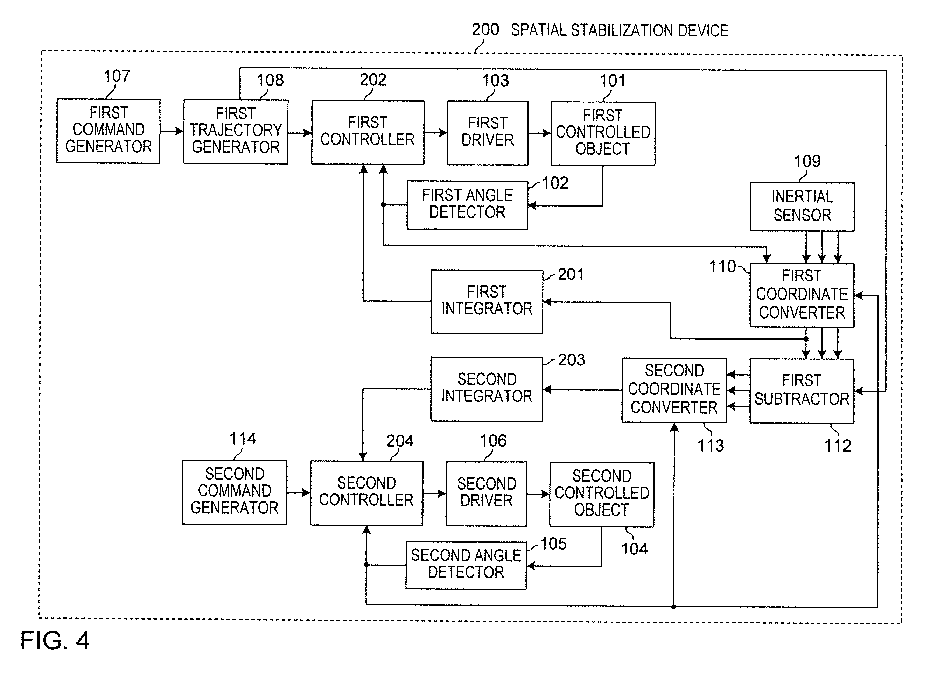

FIG. 4 is a block diagram showing the configuration of spatial stabilization device 200 according to the third exemplary embodiment of the present invention. In FIG. 4, constructions identical to FIG. 1 are given the same reference numbers and redundant explanation is omitted.

Compared to spatial stabilization device 100 of the first exemplary embodiment, spatial stabilization device 200 of the present exemplary embodiment differs in that first integrator 201 and second integrator 203 are added, first controller 111 is altered to first controller 202, and second controller 115 is altered to second controller 204.

First integrator 201 integrates the angular velocity (the first angle component of the Euler angle of the shaking angular velocity in the second coordinate system) that is indicated in the second measured angular velocity signal. When the shaking angular velocity is integrated, it becomes angle information. First integrator 201 generates a first angle component signal that indicates the angle that is obtained by integrating the shaking angular velocity (referred to as the shaking angle) and supplies the signal to first controller 202.

First controller 202 controls the rotation of first controlled object 101 such that the difference between the target angle trajectory and the detected angle of first angle detector 102 becomes "0". First controller 202 here subtracts the angle (shaking angle) indicated in the first angle component signal from the target angle trajectory, whereby airframe shaking around the first axis can be cancelled. As a result, the angle of first controlled object 101 with respect to the stationary part is controlled to achieve spatial stabilization with respect to inertial system.

Second integrator 203 integrates the angular velocity (the second angle component of the Euler angle of shaking angular velocity in the third coordinate system) that is indicated in the fourth measured angular velocity signal. Integrating the angular velocity that is indicated in the fourth measured angular velocity signal enables the acquisition of angle information indicating the residual shaking angle that could not be cancelled by first controller 202. Second integrator 203 generates a second angle component signal that indicates the residual shaking angle and supplies the signal to second controller 204.

Second controller 204 controls the rotation of second controlled object 104 such that the difference between the target angle of the second angle and the detected angle of second angle detector 105 becomes "0". Second controller 204 here subtracts the angle (residual shaking angle) indicated in the second angle component signal from the target angle, whereby the first residual shaking angular velocity can be cancelled. As a result, the angle of second controlled object 104 with respect to first controlled object 101 is controlled to achieve spatial stabilization with respect to inertial space.

Thus, according to spatial stabilization device 200 of the present exemplary embodiment, first integrator 201 integrates the angular velocity detected by inertial sensor 109 to obtain a first angle component signal that indicates the shaking angle. In addition, first controller 202 controls the rotation of first controlled object 101 such that the shaking angle indicated in the first angle component signal is cancelled.

As a result, the angle of first controlled object 101 with respect to the stationary part is controlled so as to achieve spatial stabilization with respect to inertial space.

Further, according to spatial stabilization device 200 of the present exemplary embodiment, second integrator 203 integrates the angular velocity that follows coordinate conversion by second coordinate converter 113 to obtain a second angle component signal that indicates the residual shaking angle. Second controller 204 further controls the rotation of the second controlled object such that the residual shaking angle indicated in the second angle component signal is cancelled.

As a result, as in the first exemplary embodiment, a single inertial sensor 109 can be used to improve the spatial stability of first controlled object 101 and second controlled object 104.

In the present exemplary embodiment, inertial sensor 109 is assumed to be attached to first controlled object 101 as in the first exemplary embodiment, but the present invention is not limited to this form. Inertial sensor 109 may also be attached to second controlled object 104, as in the second exemplary embodiment.

Fourth Exemplary Embodiment:

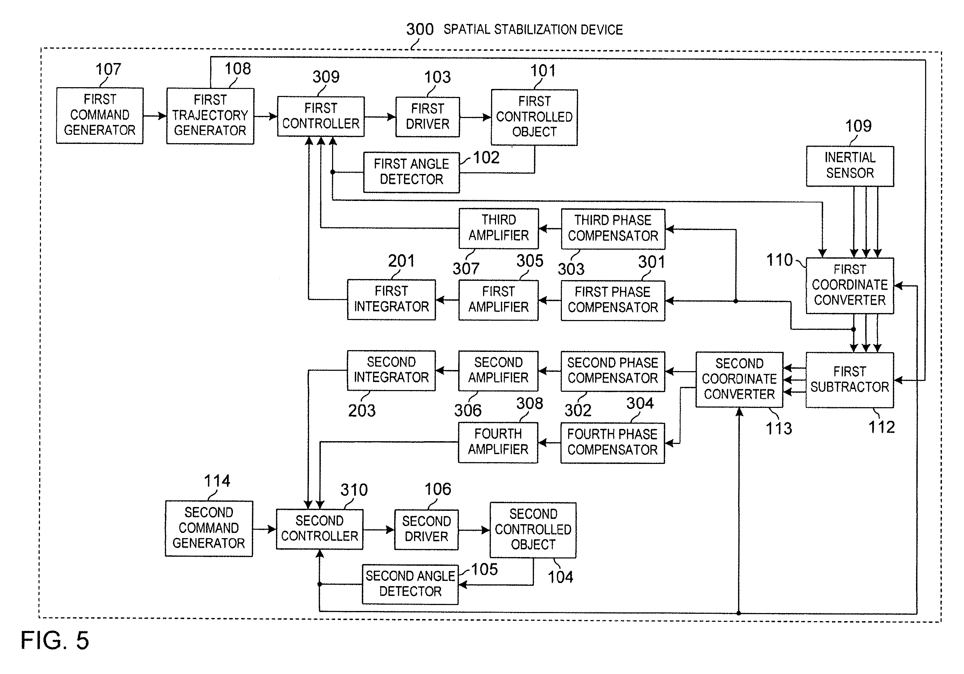

FIG. 5 is a block diagram showing the configuration of spatial stabilization device 300 according to the fourth exemplary embodiment of the present invention. In FIG. 5, constructions identical to FIG. 4 are given the same reference numbers and redundant explanation is omitted.

Compared to spatial stabilization device 200 of the third exemplary embodiment, spatial stabilization device 300 of the present exemplary embodiment differs in that first phase compensator 301, second phase compensator 302, third phase compensator 303, fourth phase compensator 304, first amplifier 305, second amplifier 306, third amplifier 307, and fourth amplifier 308 are added and that first controller 202 is changed to first controller 309 and second controller 204 is changed to second controller 310.

The second measured angular velocity signal is applied from first coordinate converter 110 to first phase compensator 301 and third phase compensator 303. In addition, the fourth measured angular velocity signal is applied from second coordinate converter 113 to second phase compensator 302 and fourth phase compensator 304.

Each of first phase compensator 301, second phase compensator 302, third phase compensator 303, and fourth phase compensator 304 uses a transfer function shown in Eq. (10) to subject the input signal to a filtering process, changes the phase of the input signal according to a frequency value that has been set in advance, and supplies the result as output. (In Eq. (10), $f_1$ and $f_2$ indicate frequencies that have been arbitrarily set by the user.)

$$\frac{s + 2\pi f_1}{s + 2\pi f_2} \qquad \text{Eq. (10)}$$

More specifically, first phase compensator 301 generates a first phase compensation signal in which the phase of the first angle component of the Euler angle of the angular velocity in the second coordinate system that is indicated in the second measured angular velocity signal is changed according to a frequency value (first value) that has been set in advance and supplies the result to first amplifier 305.

Second phase compensator 302 generates a second phase compensation signal in which the phase of the second angle component of the Euler angle of the angular velocity in the third coordinate system that is indicated in the fourth measured angular velocity signal is changed according to a frequency value (second value) that has been set in advance and supplies the result to second amplifier 306.

Third phase compensator 303 generates a third phase compensation signal in which the phase of the first angle component of the Euler angle of the angular velocity in the second coordinate system indicated in the second measured angular velocity signal is changed according to a frequency value (fifth value) that has been set in advance and supplies the result to third amplifier 307.

Fourth phase compensator 304 generates a fourth phase compensation signal in which the phase of the second angle component among the three components of the Euler angle of the angular velocity in the third coordinate system indicated in the fourth measured angular velocity signal is changed according to a frequency value (sixth value) that has been set in advance and supplies the result to fourth amplifier 308.

If the input signal and output signal of a particular converter are assumed to be functions $x(t)$ and $y(t)$ of time $t \geq 0$, respectively, and further, the Laplace transforms of the input signal and output signal are assumed to be $X(s)$, $Y(s)$, respectively, $Y(s)/X(s)$ is the transfer function. Here, the Laplace transform of the function $f(t)$ of time $t \geq 0$ is defined as

$$F(s) = \int_0^\infty f(t)e^{-st}dt .$$

First amplifier 305 changes the gain of the first phase compensation signal in accordance with a third value that has been set in advance and supplies the result to first integrator 201.

Second amplifier 306 changes the gain of the second phase compensation signal according to a fourth value that has been set in advance and supplies the result to second integrator 203.

Third amplifier 307 changes the gain of the third phase compensation signal in accordance with a seventh value that has been set in advance and supplies the result to first controller 309.

Fourth amplifier 308 changes the gain of the fourth phase compensation signal in accordance with an eighth value that has been set in advance and supplies the result to second controller 310.

In this way, first phase compensator 301 and first amplifier 305 are provided between first coordinate converter 110 and first integrator 201 in spatial stabilization device 300.

As a result, the phase of the first angle component of the shaking angle (the delay from the output of inertial sensor 109 to the first angle) that is obtained by the integration of the output of inertial sensor 109 by first integrator 201 and the gain (the ratio of the amplitude of the first angle component of the shaking angle and the amplitude of the first angle) can be adjusted. Accordingly, changing the phase characteristic of first phase compensator 301 and the value of the gain of first amplifier 305 enables the input to first controller 309 of a signal that has an optimum gain characteristic (gain = 1) and that is free of delay. Using this signal to control the rotation of first controlled object 101 enables an improvement of the spatial stabilization of first controlled object 101.

In addition, second phase compensator 302 and second amplifier 306 are provided between second coordinate converter 113 and second integrator 203 in spatial stabilization device 300.

As a result, the phase of the second angle component of the first residual shaking angle (the delay from the output of inertial sensor 109 to the second angle) that is obtained by the integration of the output of first subtractor 112 by second integrator 203 and the gain (the ratio of the amplitude of the second angle component of the shaking angle and the amplitude of the second angle) can be adjusted. Accordingly, changing the phase characteristic of second phase compensator 302 and the value of gain of second amplifier 306 enables the input to second controller 310 of a signal that is free of delay and that has an optimum gain characteristic (gain = 1). Using this signal to control the rotation of second controlled object 104 enables an improvement of the spatial stabilization of second controlled object 104.

Third phase compensator 303 and third amplifier 307 are further provided between first coordinate converter 110 and first controller 309 in spatial stabilization device 300.

As a result, the phase (delay) and gain of the Euler angle component of the shaking angular velocity in the second coordinate system can be adjusted and applied as input to first controller 309. Accordingly, first controller 309 is able to take the first angle component signal of the shaking angle as a target and implement control (proportional control) that uses the angle detected by first angle detector 102, and further, take the Euler angle component of the shaking angular velocity in the second coordinate system as a target and implement control (differential control) that uses the detected angular velocity that is obtained by differentiating over time the angle detected by first angle detector 102. Through this implementation of differential control in addition to proportional control, the spatial stability of first controlled object 101 can be improved.

In addition, by changing the phase characteristic of third phase compensator 303 and the value of the gain of third amplifier 307, a signal that is free of delay and that has an optimum gain characteristic (gain = 1) can be applied as input to first controller 309. By using this signal to control the rotation of first controlled object 101, the spatial stability of first controlled object 101 can be improved.

Fourth phase compensator 304 and fourth amplifier 308 are further provided between second coordinate converter 113 and second controller 310 in spatial stabilization device 300.

As a result, the phase (delay) and gain of the Euler angle component of the first residual shaking angular velocity in the third coordinate system can be adjusted and applied as input to second controller 310. Accordingly, second controller 310 is able to take the second angle component signal of the residual shaking angle as a target and implement control (proportional control) that uses the angle detected by second angle detector 105, and further, take the Euler angle component of the first residual shaking angular velocity in the third coordinate system as a target and implement control (differential control) that uses the detected angular velocity obtained by differentiating over time the angle detected by second angle detector 105. By implementing differential control in addition to proportional control in this way, the spatial stability of second controlled object 104 can be improved.

In addition, changing the phase characteristic of fourth phase compensator 304 and the value of gain of fourth amplifier 308 enables the input of a signal that is free from delay and that has an optimum gain characteristic (gain = 1) to second controller 310. Using this signal to control the rotation of second controlled object 104 enables an improvement of the spatial stability of second controlled object 104.

First phase compensator 301 and first amplifier 305 are thus provided between first coordinate converter 110 and first integrator 201, and third phase compensator 303 and third amplifier 307 are provided between first coordinate converter 110 and first controller 309 in spatial stabilization device 300 of the present exemplary embodiment. In addition, second phase compensator 302 and second amplifier 306 are provided between second coordinate converter 113 and second integrator 203, and fourth phase compensator 304 and fourth amplifier 308 are provided between second coordinate converter 113 and second controller 310 in spatial stabilization device 300 of the present exemplary embodiment.

As a result, first controller 309 is able to receive the first angle component signal that is free of delay and that has optimum gain and second measured angular velocity signal that is free of delay and that has optimum gain. In addition, second controller 310 is able to receive the second angle component signal that is free of delay and that has optimum gain and fourth measured angular velocity signal that is free of gain and that has optimum gain. The implementation of rotation control of the controlled object using these signals enables an improvement of the spatial stability of first controlled object 101 and second controlled object 104.

Not all of first phase compensator 301, second phase compensator 302, third phase compensator 303, fourth phase compensator 304, first amplifier 305, second amplifier 306, third amplifier 307, and fourth amplifier 308 need be provided in spatial stabilization device 300.

For example, spatial stabilization device 300 may be of a configuration that lacks third phase compensator 303, fourth phase compensator 304, third amplifier 307, and fourth amplifier 308. In this case, first controller 309 is able to receive the first angle component signal that is free of delay and that has optimum gain. In addition, second controller 310 is able to receive the second angle component signal that is free of delay and that has optimum gain.

Still further, spatial stabilization device 300 maybe of a configuration that lacks first phase compensator 301, second phase compensator 302, first amplifier 305, and second amplifier 306. In this case, second controller 309 is able to receive a second measured angular velocity signal that is free of delay and that has optimum gain. Second controller 310 is further able to receive the fourth measured angular velocity signal that is free of delay and that has optimum gain.

Fifth Exemplary Embodiment:

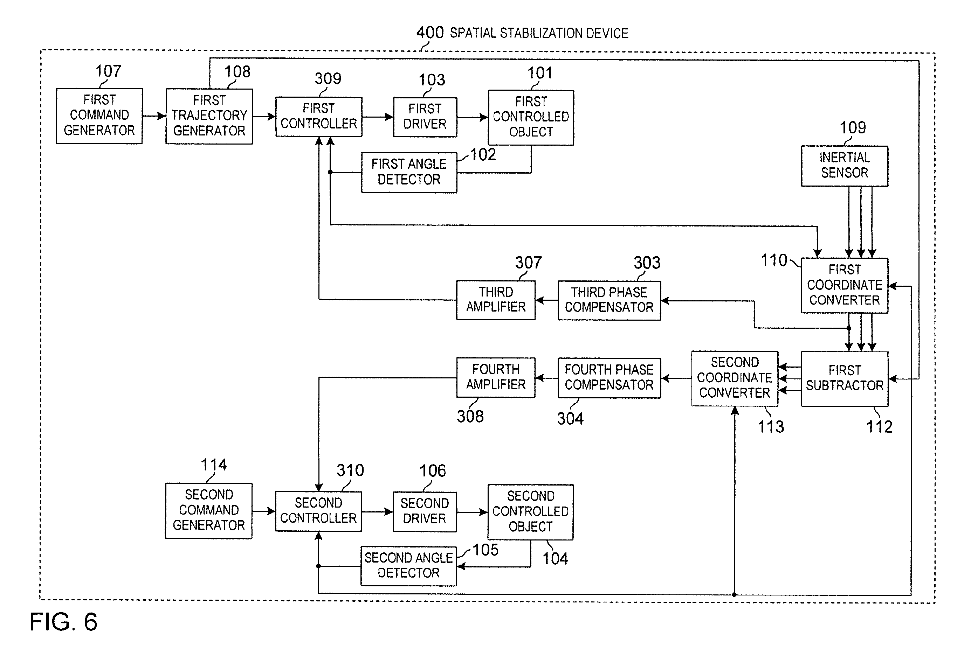

FIG. 6 is a block diagram showing the configuration of spatial stabilization device 400 according to the fifth exemplary embodiment of the present invention. In FIG. 6, constructions that are identical to those of FIG. 1 are given the same reference numbers and redundant explanation is omitted.

Spatial stabilization device 400 of the present exemplary embodiment differs from spatial stabilization device 100 of the first exemplary embodiment in that third phase compensator 303, fourth phase compensator 304, third amplifier 307, and fourth amplifier 308 are added and in that first controller 111 is changed to first controller 309 and second controller 115 is changed to second controller 310.

Third phase compensator 303, fourth phase compensator 304, third amplifier 307, fourth amplifier 308, first controller 309, and second controller 310 in the present exemplary embodiment each correspond to third phase compensator 303, fourth phase compensator 304, third amplifier 307, fourth amplifier 308, first controller 309, and second controller 310, respectively, in the fourth exemplary embodiment.

Thus, in spatial stabilization device 400, third phase compensator 303 and third amplifier 307 are provided between first coordinate converter 110 and first controller 309.

As a result, phase (delay) and gain of the Euler angle component of the shaking angular velocity in the second coordinate system can be adjusted and applied as input to first controller 309. Accordingly, first controller 309 is able to take the first angle component signal of the shaking angle as the target and implement control (proportional control) that uses the angle detected by first angle detector 102, and further to take the Euler angle component of the shaking angular velocity in the inertial sensor coordinate system (first coordinate system) as a target and implement control (differential control) that uses the detected angular velocity obtained by time-differentiating the angle detected by first angle detector 102. The implementation of differential control in addition to proportional control enables an improvement of the spatial stability of first controlled object 101.

In addition, the alteration of the phase characteristic of third phase compensator 303 and the value of the gain of third amplifier 307 enables first controller 309 to receive a signal that is free of delay and that has an optimum gain characteristic (gain = 1). Using this signal to implement control of the rotation of first controlled object 101 enables an improvement of spatial stability.

In addition, fourth phase compensator 304 and fourth amplifier 308 are provided between second coordinate converter 113 and second controller 310 in spatial stabilization device 400.

As a result, the phase (delay) and gain of the Euler angle component of the first residual shaking angular velocity in the third coordinate system can be adjusted and applied as input to second controller 310. Accordingly, second controller 310 is able to take the second angle component signal of the residual shaking angle as a target and implement control (proportional control) that uses the angle detected by second angle detector 105, and further, to take the Euler angle component of the first residual shaking angular velocity in the third coordinate system as a target and implement control (differential control) that uses the detected angular velocity that is obtained by time-differentiating the angle detected by second angle detector 105. This implementation of differential control in addition to proportional control enables an improvement of the spatial stability of second controlled object 104.

In addition, by changing the phase characteristic of fourth phase compensator 304 and the value of the gain of fourth amplifier 308, a signal that is free of delay and that has an optimum gain characteristic (gain = 1) can be applied as input to second controller 310. Using this signal to implement control of the rotation of second controlled object 104 enables an improvement of the spatial stability of second controlled object 104.

Third phase compensator 303 and third amplifier 307 are thus provided between first coordinate converter 110 and first controller 309 in spatial stabilization device 400 of the present exemplary embodiment.

In addition, fourth phase compensator 304 and fourth amplifier 308 are provided between second coordinate converter 113 and second controller 310 in spatial stabilization device 400 of the present exemplary embodiment.

As a result, first controller 309 is able to receive the second measured angular velocity signal that is free of delay and that has optimum gain. In addition, second controller 310 is able to receive the fourth measured angular velocity signal that is free of delay and that has optimum gain. Using these signals to implement rotational control of the controlled objects enables an improvement of the spatial stability of first controlled object 101 and second controlled object 104.

In addition, not all of third phase compensator 303, fourth phase compensator 304, third amplifier 307, and fourth amplifier 308 need be provided.

For example, spatial stabilization device 400 may be of a configuration that lacks third phase compensator 303 and third amplifier 307. Still further, spatial stabilization device 400 may be of a configuration that lacks fourth phase compensator 304 and fourth amplifier 308.

In addition, spatial stabilization device 400 of the present exemplary embodiment may also be provided with first phase compensator 301, first amplifier 305, first integrator 201, second phase compensator 302, second amplifier 306, and second integrator 203 as in spatial stabilization device 300 of the fourth exemplary embodiment.

In addition, although inertial sensor 109 in the present exemplary embodiment is assumed to be attached to first controlled object 101 as in the first exemplary embodiment, the present invention is not limited to this form. Inertial sensor 109 may also be attached to second controlled object 104 as in the second exemplary embodiment.

Sixth Exemplary Embodiment:

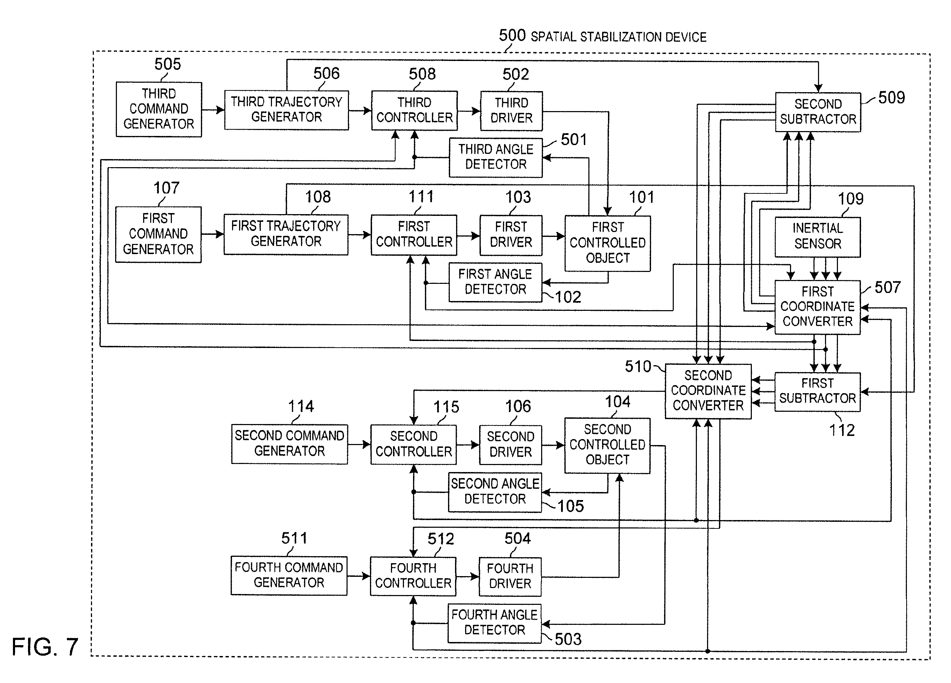

FIG. 7 is a block diagram showing the configuration of spatial stabilization device 500 according to the sixth exemplary embodiment of the present invention. In FIG. 7, constructions identical to those of FIG. 1 are given the same reference numbers and redundant explanation is omitted.

Spatial stabilization device 500 of the present exemplary embodiment differs from spatial stabilization device 100 of the first exemplary embodiment in that first controlled object 101 is linked to the stationary part so as to freely rotate around two axes and second controlled object 104 is linked to first controlled object 101 so as to freely rotate around two axes. In the following explanation, one of the two axes around which first controlled object 101 rotates freely with respect to the stationary part is referred to as the first axis, and the other is referred to as the third axis. One of the two axes around which second controlled object 104 rotates freely with respect to first controlled object 101 is referred to as the second axis and the other is referred to as the fourth axis. The direction of the first axis need not coincide with the direction of the second axis and the direction of the third axis need not coincide with the direction of the fourth axis.

Spatial stabilization device 500 of the present exemplary embodiment further differs from spatial stabilization device 100 of the first exemplary embodiment in that third angle detector 501, third driver 502, fourth angle detector 503, fourth driver 504, third command generator 505, third trajectory generator 506, third controller 508, second subtractor 509, fourth command generator 511, and fourth controller 512 are added, and in that first coordinate converter 110 is changed to first coordinate converter 507 and second coordinate converter 113 is changed to second coordinate converter 510.

Third angle detector 501, third driver 502, third command generator 505, third trajectory generator 506, and third controller 508 make up the control system that controls the rotation around the third axis of first controlled object 101. Third angle detector 501, third driver 502, third command generator 505, third trajectory generator 506, and third controller 508 each correspond to first angle detector 102, first driver 103, first command generator 107, first trajectory generator 108, and first controller 111, respectively, that make up the control system that controls the rotation around the first axis of first controlled object 101.

In addition, fourth angle detector 503, fourth driver 504, fourth command generator 511, and fourth controller 512 make up the control system that controls the rotation of second controlled object 104 around the fourth axis. Fourth angle detector 503, fourth driver 504, fourth command generator 511, and fourth controller 512 each correspond to second angle detector 105, second driver 106, and second controller 115 that make up the control system that controls the rotation of second controlled object 104 around the second axis.

Second subtractor 509 receives the input of the second measured angular velocity signal from first coordinate converter 507, and further, receives the input of the target angular velocity signal (a signal that indicates the target angular velocity trajectory that corresponds to the angle trajectory for which the third angle is the target angle) from third trajectory generator 506. Second subtractor 509 subtracts the angular velocity that is indicated in the target angular velocity signal from the angular velocity (the Euler angle component of the shaking angular velocity in the second coordinate system) that is indicated in the second measured angular velocity signal. Carrying out this process enables the extraction of the residual shaking angular velocity around the third angle in the second coordinate system. Second subtractor 509 supplies a signal that indicates the extracted angular velocity to second coordinate converter 510. In the following explanation, the residual shaking angular velocity around the third angle is referred to as the third residual shaking angular velocity.

In the following explanation, it is assumed that inertial sensor 109 is secured to the first controlled object and that the inertial sensor coordinate system coincides with the second coordinate system.

First coordinate converter 507 uses the following Eq. (11) to convert the angular velocity in the inertial sensor coordinate system that is indicated in the first measured angular velocity signal to the angular velocity in the second coordinate system. In the following explanation, the third angle is assumed to be indicated by $\theta_{11}$.

$$\begin{bmatrix} \omega_{x1} & \omega_{y1} & \omega_{z1} \end{bmatrix}^T = \begin{bmatrix} \omega_x & \omega_y & \omega_z \end{bmatrix}^T \qquad \text{Eq. (11)}$$

Further, second coordinate converter 510 uses the following Eq. (12) and Eq. (13) to convert the first residual shaking angular velocity that is indicated in the third measured angular velocity signal to angular velocity in the third coordinate system. The fourth angle is hereinbelow assumed to be indicated by $\theta_{22}$.

$$\begin{bmatrix} \omega_{x2} & \omega_{y2} & \omega_{z2} \end{bmatrix}^T = C^3(\psi_{22}) \begin{bmatrix} \omega_{xx2} & \omega_{yy2} & \omega_{zz2} \end{bmatrix}^T \qquad \text{Eq. (12)}$$

$$\begin{bmatrix} \omega_{xx2} & \omega_{yy2} & \omega_{zz2} \end{bmatrix}^T = C^1(\phi_2)C^3(\theta_2)C^3(\psi_2)\begin{bmatrix} \omega_{xa1} & \omega_{ya1} & \omega_{za1} \end{bmatrix}^T \qquad \text{Eq. (13)}$$

First coordinate converter 507 may also implement coordinate conversion by using Eq. (14), which is a relational expression of the time-integration of an Euler angle that uses a 1-2-3 Euler angle sequence, in place of Eq. (11). Further, second coordinate converter 510 may also implement coordinate conversion using Eq. (15), which is a relational expression of the time-integration of an Euler angle that uses a 1-2-3 Euler angle sequence, in place of Eq. (12) and Eq. (13).

$$\begin{bmatrix} \omega_{x1} & \omega_{y1} & \omega_{z1} \end{bmatrix}^T = \begin{bmatrix} \omega_x & \omega_y & \omega_z \end{bmatrix}^T \qquad \text{Eq. (14)}$$

$$\begin{bmatrix} \omega_{x2} \\ \omega_{y2} \\ \omega_{z2} \end{bmatrix} = \begin{bmatrix} \dfrac{\cos(\psi_2 + \psi_{22})}{\cos(\theta_2 + \theta_{22})} & -\dfrac{\sin(\psi_2 + \psi_{22})}{\cos(\theta_2 + \theta_{22})} & 0 \\ \sin(\psi_2 + \psi_{22}) & \cos(\psi_2 + \psi_{22}) & 0 \\ -\dfrac{\cos(\psi_2 + \psi_{22})\sin(\theta_2 + \theta_{22})}{\cos(\theta_2 + \theta_{22})} & \dfrac{\sin(\psi_2 + \psi_{22})\sin(\theta_2 + \theta_{22})}{\cos(\theta_2 + \theta_{22})} & 1 \end{bmatrix} \begin{bmatrix} \omega_{x1} \\ \omega_{y1} \\ \omega_{z1} \end{bmatrix}$$

$$\text{Eq. (15)}$$

An example has here been described for a case in which two axes (the y-axis and z-axis) of the three axes of the inertial sensor coordinate system are caused to coincide with the third-axis direction and the first-axis direction, respectively.

Thus, according to spatial stabilization device 500 of the present exemplary embodiment, first controller 111, second controller 115, third controller 508, and fourth controller 512 each use the detection results of inertial sensor 109.

More specifically, first controller 111 uses the detection result of inertial sensor 109 to control the rotation of first controlled object 101 such that the airframe shaking around the first axis is cancelled. As a result, the angle of first controlled object 101 with respect to the stationary part is controlled to achieve spatial stabilization with respect to inertial space.

Second controller 115 uses the detection results of inertial sensor 109 to control the rotation of second controlled object 104 such that first residual shaking angular velocity that could not be eliminated by first controller 111 is cancelled. As a result, the angle of second controlled object 104 with respect to first controlled object 101 is controlled to achieve spatial stabilization with respect to inertial space.

Third controller 508 uses the detection results of inertial sensor 109 to control the rotation of first controlled object 101 such that airframe shaking around the third axis is cancelled. As a result, the angle of first controlled object 101 with respect to the stationary part is controlled to achieve spatial stabilization with respect to inertial space.

Fourth controller 512 uses the detection results of inertial sensor 109 to control the rotation of second controlled object 104 such that the third residual shaking angular velocity that could not be eliminated in third controller 508 is cancelled. As a result, the angle of second controlled object 104 with respect to first controlled object 101 is controlled to achieve spatial stabilization with respect to inertial space.

Accordingly, spatial stabilization device 500 of the present exemplary embodiment enables an improvement of the spatial stability by using only one inertial sensor 109.

When the direction of one axis (in the present exemplary embodiment, explanation regards a case in which this is the z-axis, but the present invention is not limited to the z-axis) of the three axes of the inertial sensor coordinate system coincides with the direction of the first axis and the second axis, spatial stabilization device 500 operates by using only one component and replaces the components of the remaining two axes with "0".

In the present exemplary embodiment, first controller 111, second controller 115, third controller 508, and fourth controller 512 each control the rotation of a controlled object such that the difference between the target angle and the angle detected by the corresponding angle detector becomes "0", but the present invention is not limited to this form. First controller 111, second controller 115, third controller 508, and fourth controller 512 may also each control the rotation of a controlled object such that the difference between a target angular velocity and an angular velocity obtained by differentiating the angle detected by a corresponding angle detector becomes "0".

In addition, spatial stabilization device 500 of the present exemplary embodiment may also be provided with an integrator as in spatial stabilization device 200 of the third exemplary embodiment, or may also be provided with a phase compensator and amplifier as in the spatial stabilization device of the fourth or fifth exemplary embodiment.

Seventh Exemplary Embodiment:

The configuration of the spatial stabilization device according to the seventh exemplary embodiment of the present invention is the same as the configuration of spatial stabilization device 500 of the sixth exemplary embodiment, and a drawing is therefore omitted. In the following explanation, explanation of points that are shared by the present exemplary embodiment and the sixth exemplary embodiment will be omitted.

In contrast to the sixth exemplary embodiment in which inertial sensor 109 is attached to first controlled object 101, inertial sensor 109 in the present exemplary embodiment is attached to second controlled object 104.

In the present exemplary embodiment, since inertial sensor 109 is attached to second controlled object 104, the operation of the coordinate conversion by second coordinate converter 510 is different. To be specific, second coordinate converter 510 uses Eq. (16) to convert the residual shaking angular velocity in the second coordinate system to angular velocity in the third coordinate system.

$$\begin{bmatrix} \omega_{x1} & \omega_{y1} & \omega_{z1} \end{bmatrix}^T = \left\{ C^3(\psi_{22}) \right\}^{-1} \begin{bmatrix} \omega_x & \omega_y & \omega_z \end{bmatrix}^T \qquad \text{Eq. (16)}$$

Second coordinate converter 510 may also use Eq. (17), which is a relational expression of the time-integration of an Euler angle that uses a 1-2-3 Euler angle sequence, to carry out coordinate conversion, in place of Eq. (16).

$$\begin{bmatrix} \omega_{x1} & \omega_{y1} & \omega_{z1} \end{bmatrix}^T = \begin{bmatrix} \cos(-\psi_{22}) & -\sin(-\psi_{22}) & 0 \\ \sin(-\psi_{22}) & \cos(-\psi_{22}) & 0 \\ 0 & 0 & 1 \end{bmatrix} \begin{bmatrix} \omega_x & \omega_y & \omega_z \end{bmatrix}^T \qquad \text{Eq. (17)}$$

Thus, according to the spatial stabilization device of the present exemplary embodiment, inertial sensor 109 is attached to second controlled object 104, and second coordinate converter 510 uses Eq. (16) or Eq. (17) to convert the residual shaking angular velocity in the second coordinate system to angular velocity in the third coordinate system.

As a result, first controller 111 is able to use the detection results of inertial sensor 109 to control the rotation of first controlled object 101 such that airframe shaking around the first axis is cancelled, as in the sixth exemplary embodiment. As a result, the angle of first controlled object 101 with respect to the stationary part is controlled to achieve spatial stabilization with respect to inertial space.

Second controller 115 is able to use the detection results of inertial sensor 109 to generate a signal that controls the rotation of second controlled object 104 such that the first residual shaking angular velocity that could not be eliminated in first controller 111 is cancelled. As a result, the angle of second controlled object 104 with respect to first controlled object 101 is controlled to achieve spatial stabilization with respect to inertial space.

Third controller 508 is able to use the detection results of inertial sensor 109 to control the rotation of first controlled object 101 such that the airframe shaking around the third axis is cancelled. As a result, the angle of first controlled object 101 with respect to the stationary part is controlled to achieve spatial stabilization with respect to inertial space.

Second controller 510 is able to use the detection results of inertial sensor 109 to generate a signal that controls the rotation of second controlled object 104 such that the third residual shaking angular velocity that could not be eliminated in third controller 508 is cancelled. As a result, the angle of second controlled object 104 with respect to first controlled object 101 is controlled to achieve spatial stabilization with respect to inertial space.

Accordingly, the spatial stabilization device of the present exemplary embodiment enables the improvement of spatial stability even when inertial sensor 109 is attached to the second controlled object.

The method carried out by the spatial stabilization device according to the present invention may be applied to a program for execution by a computer. This program can also be stored in a storage medium, or can be provided to the outside by way of a network.

Although the invention of the present application has been described with reference to exemplary embodiments, the present invention is not limited to the above-described exemplary embodiments. The configuration and details of the invention of the present application are open to various modifications within the scope of the invention of the present application that will be clear to one of ordinary skill in the art.

This application claims the benefits of priority based on Japanese Patent Application No. 2013-44301 for which application was submitted on March 6, 2013 and incorporates by citation all of the disclosures of that application.

All or a portion of the above-described exemplary embodiments can be described as in the following Supplementary Notes but are not limited to the following Supplementary Notes.

(Supplementary Note 1)

A spatial stabilization device includes:

a first controlled object that is linked to a stationary part so as to freely rotate around a first axis;
a second controlled object that is linked to the first controlled object so as to freely rotate around a second axis;
a first angle detector that detects a first angle that is an angle around the first axis of the first controlled object with respect to the stationary part and that generates a first angle detection signal that indicates result of the detection;
a second angle detector that detects a second angle that is an angle around the second axis of the second controlled object with respect to the first controlled object and that generates a second angle detection signal that indicates result of the detection;
an inertial sensor that detects an angular velocity in a first coordinate system at an attachment position and that generates a first measured angular velocity signal that indicates result of the detection;
a first trajectory generator that, in accordance with a first target value of the first angle that has been set in advance, generates a target angle signal that indicates an angle trajectory at which the first angle becomes the first target value and a target angular velocity signal that indicates a target angular velocity trajectory that is a trajectory of an angular velocity that corresponds to the angle trajectory;
a first coordinate converter that converts the angular velocity that is indicated in the first measured angular velocity signal to an angular velocity in a second coordinate system that is fixed to the first controlled object and that generates a second measured angular velocity signal that indicates the angular velocity that follows the conversion;
a first subtractor that subtracts the angular velocity that is indicated in the target angular velocity signal from the angular velocity that is indicated in the second measured angular velocity signal and that generates a third measured angular velocity signal that indicates the angular velocity that follows the subtraction;
a second coordinate converter that converts the angular velocity that is indicated in the third measured angular velocity signal to an angular velocity in a third coordinate system that is fixed to the second controlled object and that generates a fourth measured angular velocity signal that indicates the angular velocity that follows the conversion;
a first controller that controls the first angle in accordance with the target angle signal, the first angle detection signal, and the second measured angular velocity signal; and
a second controller that controls the second angle in accordance with a second target value of the second angle that has been set in advance, the second angle detection signal, and the fourth measured angular velocity signal.

(Supplementary Note 2)

In the spatial stabilization device described in Supplementary Note 1:

the first controller controls the first angle based on one component of the angular velocity that is indicated in the second measured angular velocity signal; and
the second controller controls the second angle based on one component of the angular velocity that is indicated in the fourth measured angular velocity signal.

(Supplementary Note 3)

The spatial stabilization device described in Supplementary Note 1 further includes:

a first integrator that time-integrates one component of the angular velocity that is indicated in the second measured angular velocity signal; and
a second integrator that time- integrates one component of the angular velocity that is indicated in the fourth measured angular velocity signal;
wherein:

the first controller controls the first angle based on result of the integration realized by the first integrator; and
the second controller controls the second angle based on result of the integration realized by the second integrator.

(Supplementary Note 4)

The spatial stabilization device described in Supplementary Note 3 further includes:

a first phase compensator that generates a first phase compensation signal in which phase of one component of the angular velocity that is indicated in the second measured angular velocity signal is changed in accordance with a first value that has been set in advance;

a first amplifier that applies as input to the first integrator a signal in which gain of the first phase compensation signal has been changed according to a second value that has been set in advance;

a second phase compensator that generates a second phase compensation signal in which phase of one component of components of the angular velocity that is indicated in the fourth measured angular velocity signal has been changed in accordance with a third value that has been set in advance; and

a second amplifier that applies as input to the second integrator a signal in which gain of the second phase compensation signal has been changed in accordance with a fourth value that has been set in advance.

(Supplementary Note 5)

The spatial stabilization device described in any one of Supplementary Notes 1 to 4 further includes:

a third phase compensator that generates a third phase compensation signal in which phase of one component of the angular velocity that is indicated in the second measured angular velocity signal has been changed in accordance with a fifth value that has been set in advance;

a third amplifier that applies as input to the first controller a signal in which gain of the third phase compensation signal has been changed in accordance with a sixth value that has been set in advance;

a fourth phase compensator that generates a fourth phase compensation signal in which phase of one component of components of the angular velocity that is indicated in the fourth measured angular velocity signal has been changed in accordance with a seventh value that has been set in advance; and

a fourth amplifier that applies as input to the second controller a signal in which gain of the fourth phase compensation signal has been changed in accordance with an eighth value that has been set in advance.

(Supplementary Note 6)

In the spatial stabilization device as described in any one of Supplementary Notes 1 to 5, the inertial sensor is attached to the stationary part.

(Supplementary Note 7)

In the spatial stabilization device as described in any one of Supplementary Notes 1 to 5, the inertial sensor is attached to the first controlled object.

(Supplementary Note 8)

In the spatial stabilization device as described in any one of Supplementary Notes 1 to 5, the inertial sensor is attached to the second controlled object.

(Supplementary Note 9)

A control method of a spatial stabilization device includes:

detecting a first angle, which is an angle around a first axis of a first controlled object that is linked to a stationary part so as to freely rotate around the first axis with respect to the stationary part, and then generating a first angle detection signal that indicates result of the detection;

detecting a second angle, which is an angle around a second axis of a second controlled object that is linked to the first controlled object so as to freely rotate around the second axis with respect to the first controlled object, and then generating a second angle detection signal that indicates result of the detection;

detecting an angular velocity in a first coordinate system and generating a first measured angular velocity signal that indicates result of the detection;

converting the angular velocity that is indicated in the first measured angular velocity signal to an angular velocity in a second coordinate system that is fixed to the first controlled object and then generating a second measured angular velocity signal that indicates the angular velocity that follows the conversion;

subtracting the angular velocity that is indicated in the target angular velocity signal from the angular velocity that is indicated in the second measured angular velocity signal and then generating a third measured angular velocity signal that indicates the angular velocity that follows the subtraction;

converting the angular velocity that is indicated in the third measured angular velocity signal to an angular velocity in a third coordinate system that is fixed to the second controlled object and then generating a fourth measured angular velocity signal that indicates the angular velocity that follows the conversion;

controlling the first angle in accordance with the target angle signal, the first angle detection signal, and the second measured angular velocity signal; and

controlling the second angle in accordance with a second target value of the second angle that has been set in advance, the second angle detection signal, and the fourth measured angular velocity signal.

(Supplementary Note 10)

A program that causes a computer in a spatial stabilization device that is equipped with: a first controlled object that is linked to a stationary part so as to freely rotate around a first axis, a second controlled object that is linked to the first controlled object so as to freely rotate around a second axis, a first angle detector that detects a first angle that is an angle around the first axis of the first controlled object with respect to the stationary part and that generates a first angle detection signal that indicates result of the detection, a second angle detector that detects a second angle that is an angle around the second axis of the second controlled object with respect to the first controlled object and that generates a second angle detection signal that indicates result of the detection, and an inertial sensor that detects an angular velocity in a first coordinate system at an attachment position and that generates a first measured angular velocity signal that indicates result of the detection result to execute processes of:

in accordance with a first target value of the first angle that was set in advance, generating a target angle signal that indicates an angle trajectory at which the first angle becomes the first target value and a target angular velocity signal that indicates a target angular velocity trajectory that is a trajectory of an angular velocity that corresponds to the angle trajectory;

converting the angular velocity that is indicated in the first measured angular velocity signal to an angular velocity in a second coordinate system that is fixed to the first controlled object and generating a second measured angular velocity signal that indicates the angular velocity that follows the conversion;

subtracting the angular velocity that is indicated in the target angular velocity signal from the angular velocity that is indicated in the second measured angular velocity signal and then generating a third measured angular velocity signal that indicates the angular velocity that follows the subtraction;

converting the angular velocity that is indicated in the third measured angular velocity signal to an angular velocity in a third coordinate system that is fixed to the second controlled object and then generating a fourth measured angular velocity signal that indicates the angular velocity that follows the conversion;

controlling the first angle in accordance with the target angle signal, the first angle detection signal, and the second measured angular velocity signal; and

controlling the second angle in accordance with a second target value of the second angle that has been set in advance, the second angle detection signal, and the fourth measured angular velocity signal.

**Claims**

1. A spatial stabilization device comprising:

a first controlled object that is linked to a stationary part so as to freely rotate around a first axis;
a second controlled object that is linked to said first controlled object so as to freely rotate around a second axis;
a first angle detector that detects a first angle that is an angle around said first axis of said first controlled object with respect to said stationary part and that generates a first angle detection signal that indicates result of the detection;
a second angle detector that detects a second angle that is an angle around said second axis of said second controlled object with respect to said first controlled object and that generates a second angle detection signal that indicates result of the detection;
an inertial sensor that detects an angular velocity in a first coordinate system at an attachment position and that generates a first measured angular velocity signal that indicates result of the detection;
a first trajectory generator that, in accordance with a first target value of said first angle that has been set in advance, generates a target angle signal that indicates an angle trajectory at which said first angle becomes said first target value and a target angular velocity signal that indicates a target angular velocity trajectory that is a trajectory of an angular velocity that corresponds to said angle trajectory;

a first coordinate converter that converts the angular velocity that is indicated in said first measured angular velocity signal to an angular velocity in a second coordinate system that is fixed to said first controlled object and that generates a second measured angular velocity signal that indicates the angular velocity that follows the conversion;

a first subtractor that subtracts the angular velocity that is indicated in said target angular velocity signal from the angular velocity that is indicated in said second measured angular velocity signal and that generates a third measured angular velocity signal that indicates the angular velocity that follows the subtraction;

a second coordinate converter that converts the angular velocity that is indicated in said third measured angular velocity signal to an angular velocity in a third coordinate system that is fixed to said second controlled object and that generates a fourth measured angular velocity signal that indicates the angular velocity that follows the conversion;

a first controller that controls said first angle in accordance with said target angle signal, said first angle detection signal, and said second measured angular velocity signal; and

a second controller that controls said second angle in accordance with a second target value of said second angle that has been set in advance, said second angle detection signal, and said fourth measured angular velocity signal.

2. The spatial stabilization device as set forth in claim 1, wherein:

said first controller controls said first angle based on one component of the angular velocity that is indicated in said second measured angular velocity signal; and

said second controller controls said second angle based on one component of the angular velocity that is indicated in said fourth measured angular velocity signal.

3. The spatial stabilization device as set forth in claim 1, further comprising:

a first integrator that time-integrates one component of the angular velocity that is indicated in said second measured angular velocity signal; and

a second integrator that time-integrates one component of the angular velocity that is indicated in said fourth measured angular velocity signal;

wherein said first controller controls said first angle based on result of the integration realized by said first integrator, and

wherein said second controller controls said second angle based on result of the integration realized by said second integrator.

4. The spatial stabilization device as set forth in claim 3, further comprising:

a first phase compensator that generates a first phase compensation signal in which phase of one component of the angular velocity that is indicated in said second measured angular velocity signal is changed in accordance with a first value that has been set in advance;

a first amplifier that applies as input to said first integrator a signal in which gain of said first phase compensation signal has been changed according to a second value that has been set in advance;

a second phase compensator that generates a second phase compensation signal in which phase of one component of components of the angular velocity that is indicated in said fourth measured angular velocity signal has been changed in accordance with a third value that has been set in advance; and

a second amplifier that applies as input to said second integrator a signal in which gain of said second phase compensation signal has been changed in accordance with a fourth value that has been set in advance.

5. The spatial stabilization device as set forth in any one of claims 1 to 4, further comprising:

a third phase compensator that generates a third phase compensation signal in which phase of one component of the angular velocity that is indicated in said second measured angular velocity signal has been changed in accordance with a fifth value that has been set in advance;

a third amplifier that applies as input to said first controller a signal in which gain of said third phase compensation signal has been changed in accordance with a sixth value that has been set in advance;

a fourth phase compensator that generates a fourth phase compensation signal in which phase of one component of components of the angular velocity that is indicated in said fourth measured angular velocity signal has been changed in accordance with a seventh value that has been set in advance; and

a fourth amplifier that applies as input to said second controller a signal in which gain of said fourth phase compensation signal has been changed in accordance with an eighth value that has been set in advance.

6. The spatial stabilization device as set forth in any one of claims 1 to 5, wherein said inertial sensor is attached to said stationary part.

7. The spatial stabilization device as set forth in any one of claims 1 to 5, wherein said inertial sensor is attached to said first controlled object.

8. The spatial stabilization device as set forth in any one of claims 1 to 5, wherein said inertial sensor is attached to said second controlled object.

9. A control method of a spatial stabilization device, comprising steps:

detecting a first angle, which is an angle around a first axis of a first controlled object that is linked to a stationary part so as to freely rotate around said first axis with respect to said stationary part, and then generating a first angle detection signal that indicates result of the detection;
detecting a second angle, which is an angle around a second axis of a second controlled object that is linked to said first controlled object so as to freely rotate around said second axis with respect to said first controlled object, and then generating a second angle detection signal that indicates result of the detection;
detecting an angular velocity in a first coordinate system and generating a first measured angular velocity signal that indicates result of the detection;
converting the angular velocity that is indicated in said first measured angular velocity signal to an angular velocity in a second coordinate system that is fixed to said first controlled object and then generating a second measured angular velocity signal that indicates the angular velocity that follows the conversion;
subtracting the angular velocity that is indicated in said target angular velocity signal from the angular velocity that is indicated in said second measured angular velocity signal and then generating a third measured angular velocity signal that indicates the angular velocity that follows the subtraction;
converting the angular velocity that is indicated in the third measured angular velocity signal to an angular velocity in a third coordinate system that is fixed to said second controlled object and then generating a fourth measured angular velocity signal that indicates the angular velocity that follows the conversion;
controlling said first angle in accordance with said target angle signal, said first angle detection signal, and said second measured angular velocity signal; and
controlling said second angle in accordance with a second target value of said second angle that has been set in advance, said second angle detection signal, and said fourth measured angular velocity signal.

10. A program that causes a computer in a spatial stabilization device that is equipped with:

a first controlled object that is linked to a stationary part so as to freely rotate around a first axis,
a second controlled object that is linked to said first controlled object so as to freely rotate around a second axis, a first angle detector that detects a first angle that is an angle around said first axis of said first controlled object with respect to said stationary part and that generates a first angle detection signal that indicates result of the detection, a second angle detector that detects a second angle that is an angle around said second axis of said second controlled object with respect to said first controlled object and that generates a second angle detection signal that indicates result of the detection, and an inertial sensor that detects an angular velocity in a first coordinate system at an attachment position and that generates a first measured angular velocity signal that indicates result of the detection to execute processes of:

in accordance with a first target value of said first angle that has been set in advance, generating a target angle signal that indicates an angle trajectory at which said first angle becomes said first target value and a target angular velocity signal that indicates a target angular velocity trajectory that is a trajectory of an angular velocity that corresponds to said angle trajectory;
converting the angular velocity that is indicated in said first measured angular velocity signal to an angular velocity in a second coordinate system that is fixed to said first controlled object and generating a second measured angular velocity signal that indicates the angular velocity that follows the conversion;
subtracting the angular velocity that is indicated in said target angular velocity signal from the angular velocity that is indicated in said second measured angular velocity signal and then generating a third measured angular velocity signal that indicates the angular velocity that follows the subtraction;

converting the angular velocity that is indicated in said third measured angular velocity signal to an angular velocity in a third coordinate system that is fixed to the second controlled object and then generating a fourth measured angular velocity signal that indicates the angular velocity that follows the conversion; controlling said first angle in accordance with said target angle signal, said first angle detection signal, and said second measured angular velocity signal; and controlling said second angle in accordance with a second target value of said second angle that has been set in advance, said second angle detection signal, and said fourth measured angular velocity signal.

100 SPATIAL STABILIZATION DEVICE

FIG. 1

100   SPATIAL STABILIZATION DEVICE

120  COMPUTER

103
FIRST
DRIVER

101
FIRST
CONTROLLED
OBJECT

102
FIRST ANGLE
DETECTOR

106
SECOND
DRIVER

104
SECOND
CONTROLLED
OBJECT

105
SECOND ANGLE
DETECTOR

109
INERTIAL
SENSOR

121
I/O

126

122
STORAGE
DEVICE

123
CPU

124
KEYBOARD

125
MONITOR

FIG. 2

FIG. 3

FIG. 4

FIG. 5

EP 2 966 407 A1

FIG. 6

EP 2 966 407 A1

FIG. 7

500 SPATIAL STABILIZATION DEVICE

505 THIRD COMMAND GENERATOR
506 THIRD TRAJECTORY GENERATOR
508 THIRD CONTROLLER
502 THIRD DRIVER
509 SECOND SUBTRACTOR
501 THIRD ANGLE DETECTOR
101 FIRST CONTROLLED OBJECT
109 INERTIAL SENSOR
507 FIRST COORDINATE CONVERTER
112 FIRST SUBTRACTOR

107 FIRST COMMAND GENERATOR
108 FIRST TRAJECTORY GENERATOR
111 FIRST CONTROLLER
103 FIRST DRIVER
102 FIRST ANGLE DETECTOR

510 SECOND COORDINATE CONVERTER

114 SECOND COMMAND GENERATOR
115 SECOND CONTROLLER
106 SECOND DRIVER
104 SECOND CONTROLLED OBJECT
105 SECOND ANGLE DETECTOR

511 FOURTH COMMAND GENERATOR
512 FOURTH CONTROLLER
504 FOURTH DRIVER
503 FOURTH ANGLE DETECTOR

**INTERNATIONAL SEARCH REPORT**

| International application No. |
| --- |
| PCT/JP2013/075501 |

| A. CLASSIFICATION OF SUBJECT MATTER |
| --- |
| *G01C21/18*(2006.01)i, *G01C19/00*(2013.01)i |

According to International Patent Classification (IPC) or to both national classification and IPC

| B. FIELDS SEARCHED |
| --- |

Minimum documentation searched (classification system followed by classification symbols)
G01C21/18, G01C19/00

Documentation searched other than minimum documentation to the extent that such documents are included in the fields searched
Jitsuyo Shinan Koho          1922–1996     Jitsuyo Shinan Toroku Koho     1996–2013
Kokai Jitsuyo Shinan Koho    1971–2013     Toroku Jitsuyo Shinan Koho     1994–2013

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| A | JP 2008-293091 A (Tamagawa Seiki Co., Ltd.), 04 December 2008 (04.12.2008), paragraphs [0005], [0007], [0027] to [0030], [0036] to [0038]; fig. 1 to 2, 9 to 10 (Family: none) | 1-10 |
| A | JP 2008-293093 A (Tamagawa Seiki Co., Ltd.), 04 December 2008 (04.12.2008), paragraphs [0005], [0025] to [0028]; fig. 1, 6 (Family: none) | 1-10 |
| A | JP 4-24509 A (NEC Corp.), 28 January 1992 (28.01.1992), page 2, upper left column, line 16 to lower right column, line 6; fig. 1 to 2 (Family: none) | 1-10 |

| ☒ Further documents are listed in the continuation of Box C. | ☐ See patent family annex. |
| --- | --- |

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 10 December, 2013 (10.12.13) | 24 December, 2013 (24.12.13) |

| Name and mailing address of the ISA/ Japanese Patent Office | Authorized officer |
| --- | --- |
| Facsimile No. | Telephone No. |

Form PCT/ISA/210 (second sheet) (July 2009)

**INTERNATIONAL SEARCH REPORT**

International application No.

PCT/JP2013/075501

C (Continuation). DOCUMENTS CONSIDERED TO BE RELEVANT

| Category* | Citation of document, with indication, where appropriate, of the relevant passages | Relevant to claim No. |
|---|---|---|
| A | JP 7-235823 A (Mitsubishi Electric Corp.), 05 September 1995 (05.09.1995), paragraphs [0018] to [0045]; fig. 1 to 9 (Family: none) | 1-10 |
| A | JP 10-253349 A (Mitsubishi Electric Corp.), 25 September 1998 (25.09.1998), paragraphs [0012] to [0022]; fig. 2 to 4 (Family: none) | 1-10 |
| A | JP 4-297819 A (Mitsubishi Electric Corp.), 21 October 1992 (21.10.1992), paragraphs [0002] to [0003], [0016] to [0055]; fig. 1 to 7 (Family: none) | 1-10 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004361121 A

- JP 2013044301 A